# EUROPÄISCHE PATENTSCHRIFT

(11) **EP 4 034 320 B1**
(45) Veröffentlichungstag und Bekanntmachung des Hinweises auf die Patenterteilung: **19.07.2023**
(21) Anmeldenummer: 20775260.1
(22) Anmeldetag: 17.09.2020
(51) Int. Cl.: B22F 9/08, B22F 1/00, B22F 1/065

(54) **VORRICHTUNG ZUR VERDÜSUNG EINES SCHMELZSTROMES MITTELS EINES GASES**
DEVICE FOR ATOMIZING A MELT STREAM BY MEANS OF A GAS
DISPOSITIF D'ATOMISATION D'UN FLUX DE FUSION AU MOYEN D'UN GAZ

(30) Priorität: 24.09.2019 DE 102019214555
(43) Veröffentlichungstag der Anmeldung: 03.08.2022
(73) Patentinhaber: Ald Vacuum Technologies GmbH, 63457 Hanau (DE); GFE Metalle Und Materialien GmbH, 90431 Nuremberg (DE)
(72) Erfinder: GÜTHER, Volker, 90518 Altdorf (DE); RATSCHBACHER, Karin, 90443 Nürnberg (DE); ALLEN, Melissa, 90559 Burgthann (DE); SPITANS, Sergejs, 60598 Frankfurt am Main (DE); FRANZ, Henrik, 63579 Freigericht (DE)
(74) Vertreter: Rau, Schneck & Hübner Patentanwälte Rechtsanwälte PartGmbB
(86) Internationale Anmeldenummer: PCT/EP2020/075994
(87) Internationale Veröffentlichungsnummer: WO 2021/058374

(56) Entgegenhaltungen:
- WO-A1-2015/092008
- DE-A1-102004 001 346
- DE-B4- 19 881 316

## Beschreibung

Die Erfindung betrifft eine Vorrichtung zur Verdüsung eines metallischen, intermetallischen oder keramischen Schmelzstromes mittels eines Gases zu sphärischem Pulver mit den im Oberbegriff des Patentanspruches 1 angegebenen Merkmalen.

Zum Hintergrund der Erfindung ist auszuführen, dass Metallpulver in zahlreichen Bereichen der Technik im industriellen Maßstab zur Herstellung von Bauteilen oder funktionellen Schichten verwendet werden. Beispiele dafür sind Sinterstähle, Hartmetalle, Kontaktwerkstoffe, Permanentmagnete, Keramiken und thermisch gespritzte Schichten.

Insbesondere im Bereich des Additive Manufacturing und Metal Injection Molding werden besondere Anforderungen an die Sphärizität und Partikelgrößenverteilung der Pulver gestellt, da diese eine notwendige Voraussetzung für die prozessuale Weiterverarbeitbarkeit darstellen. Für die Herstellung von sphärischen Metallpulvern haben sich vier grundsätzliche Technologien durchgesetzt, die Plasma-gestützte Zerstäubung von Drähten - siehe WO 2011 054113 A1, die Plasma-Sphärodisierung von Pulvern mit unregelmäßiger Oberfläche - siehe EP 1 689 519 B1, der Plasma Rotating Electrode Prozess - siehe US 5 147 448 A, sowie die Gasverdüsung von flüssigen Schmelzen.

Letztere ist auch auf bestimmte Keramiken anwendbar und umfasst eine Vielzahl an verschiedenen Verfahren zur Herstellung der flüssigen Schmelzen:
- VIGA (Vacuum Induction Gas Atomization - Induktives Schmelzen in keramischen und kalten Tiegeln)
- EIGA (Electrode Induction Gas Atomization - Induktives tiegelloses Schmelzen von metallischen oder intermetallischen Stäben)
- PIGA (Plasma Inert Gas Atomization - Plasmaschmelzen im kalten Tiegel

Die Erzeugung des zu verdüsenden Gießstrahls bei tiegelbasierten Schmelzverfahren kann dabei durch Kippen des Tiegels (Ausgießen), durch einen Bodenauslauf des Tiegels oder durch ein Abschmelzen eines Stabes (Elektrode) erfolgen. Die Auswahl des bevorzugten Schmelzverfahrens geschieht entsprechend spezifischer Eigenschaften des zu schmelzenden Materials. So können beispielsweise hochschmelzende sowie sauerstoffaffine Metalle oder Legierungen nicht in keramischen Tiegeln erschmolzen werden, da die Tiegelmaterialien den Prozesstemperaturen nicht standhalten oder von der Schmelze reduziert werden.

Alle Verdüsungsverfahren von frei fallenden flüssigen Schmelzen mittels eines Verdüsungsgases besitzen einen Einfluss auf die Sphärizität und die Gasporosität der entstehenden Pulverpartikel, wie dies aus dem Fachartikel Schulz G., "Laminar sonic and supersonic gas flow atomization - the NANOVAL process", World Congress on PM & Particulate Materials, Advances in PM, 1996, 1, S. 43-54 hervorgeht. Es ist bis heute nicht möglich, gasverdüste Pulver frei von Satelliten auf den Pulverteilchenoberflächen und ohne Gasporosität zu erzeugen, was mittels PREP oder Plasmaverdüsung Stand der Technik ist. PREP und Plasmaverdüsung besitzen ihrerseits jedoch gravierende Nachteile bezüglich der Wirtschaftlichkeit und sind dementsprechend deutlich teuerer als gasverdüste Pulver.

Unter den gasgestützten Verdüsungsverfahren unterscheidet man grundsätzlich zwischen verschiedenen Auslegungen der Freifallverdüsung (free fall nozzle, close-coupled nozzle) und der gasstrahlgeführten Verdüsung mittels einer Laval-Düse.

Eine Vorrichtung zur Verdüsung eines Schmelzstroms mittels eines Gases zu sphärischem Pulver mit den im Oberbegriff des Patentanspruches 1 angegebenen Merkmalen mit einer solchen Laval-Düse ist aus der WO 2015/092008 A1 bekannt und umfasst eine Schmelzkammer, eine Pulverkammer, eine Induktionsspule in der Schmelzkammer und eine diese beiden Kammern miteinander verbindende, in einer Düsenplatte angeordnete Laval-Zerstäubungsdüse mit konvergent-divergentem Düsenprofil.

Durch die Zerstäubungsdüse wird der von einem unter Druck stehenden Verdüsungsgas radial umhüllte und in der Schmelzkammer von der Induktionsspule induktiv aus dem Schmelzmaterial erzeugte Schmelzstrom aufgrund der Wirkung der Schwerkraft in die Düse eingeführt sowie in und nach der Zerstäubungsdüse zu feinen Tröpfchen aufgespalten. Diese erstarren zu den herzustellenden Pulverpartikeln.

Es hat sich in diesem Zusammenhang gezeigt, dass die damit hergestellten Pulverpartikel bezüglich der Satellitenbildung und Entstehung von Gasporosität verbesserungsbedürftig sind.

Aufgabe der vorliegenden Erfindung ist es, eine Verdüsungsvorrichtung für die Gasverdüsung von flüssigen Metall- und Keramikschmelzen zu schaffen, die bei höchster Wirtschaftlichkeit die Satellitenbildung und die Entstehung von Gasporosität weitgehend vermeidet.

Diese Aufgabe wird laut Kennzeichnungsteil des Anspruches 1 durch die Verwendung einer neuartigen gasstrahlgeführten Zerstäubungsdüse mit einem ausschließlich konvergenten Düsenprofil mit im Querschnitt kreisbogenförmigen Düsenflanken gelöst, sodass sowohl das Verdüsungsgas als auch der Schmelzstrom und die daraus erzeugten Tröpfchen eine Geschwindigkeit maximal, vorzugsweise unter der Schallgeschwindigkeit des Verdüsungsgases erreichen. Die Gasgeschwindigkeit des Verdüsungsgases übersteigt damit im Gegensatz zur bekannten Laval-Verdüsung während des Verdüsungsprozesses die Schallgeschwindigkeit nicht.

Es hat sich herausgestellt, dass mit einem derartigen Düsenprofil qualitativ verbesserte Pulverpartikel bei höchster Wirtschaftlichkeit unter weitest gehender Vermeidung von Satellitenbildung und Gasporosität hergestellt werden können.

In den abhängigen Ansprüchen sind bevorzugte Weiterbildungen der Erfindung angegeben. So kann die Oberfläche der Düsenplatte auf der Düsenauslassseite eben und senkrecht zur Fließrichtung des Schmelzstromes ausgerichtet sein. Auf der Düsenauslassseite bildet sich damit eine ausgeprägte Kante, von der ein zusätzlicher, die Partikelbildung aus dem Schmelzstrom unterstützender Verwirbelungseffekt ausgeht.

Gemäß einer weiteren bevorzugten Ausführungsform kann die Induktionsspule höhenverstellbar ausgebildet sein.

In vorteilhafter Weise kann durch diese Höhenverstellbarkeit der Spule die freie Fallhöhe des den Schmelzstrom bildenden Gießstrahles bis zur Düse variiert werden kann. Da sich die Schmelzetemperatur insbesondere durch die Abgabe von Strahlungsleistung mit steigender Fallhöhe verringert, kann die Viskosität der Schmelze beim Eintritt in die Düse verändert und somit die entstehende Partikelgrößenverteilung gezielt gesteuert werden.

Es ist darauf hinzuweisen, dass die Höhenverstellbarkeit der Spule losgelöst von der sonstigen vorliegenden Erfindung in Verdüsungsvorrichtungen mit anderen Typen von Zerstäubungsdüsen unter Erzielung der geschilderten Vorteile eingesetzt werden kann.

Gemäß einer weiteren bevorzugten Ausführungsform kann die Induktionsspule sich in Richtung der Zerstäubungsdüse konisch verengend ausgebildet sein, wobei koaxial in der Induktionsspule ein zylindrischer Stab des zu verdüsenden Materials zur Erzeugung des Schmelzstroms angeordnet ist.

Weitere abhängige Ansprüche beziehen sich auf Parameter für die Gestaltung und Dimensionierung des Düsenprofils, mit denen sich qualitativ besonders gute Ergebnisse bei den hergestellten Pulverpartikeln ergeben. Zur Vermeidung von Wiederholungen wird auf das Ausführungsbeispiel verwiesen.

Um die erfindungsgemäße Verdüsungsvorrichtung möglichst rationell und rasch an unterschiedliche Einsatzzwecke anpassen zu können, kann in einer weiteren bevorzugten Ausführungsform die Zerstäubungsdüse in einem gesonderten, lösbar in der Düsenplatte sitzenden Düseneinsatz angeordnet sein.

Weitere Merkmale, Einzelheiten und Vorteile der Erfindung ergeben sich aus der nachfolgenden Beschreibung eines Ausführungsbeispiels anhand der beigefügten Zeichnung. Es zeigt diese:

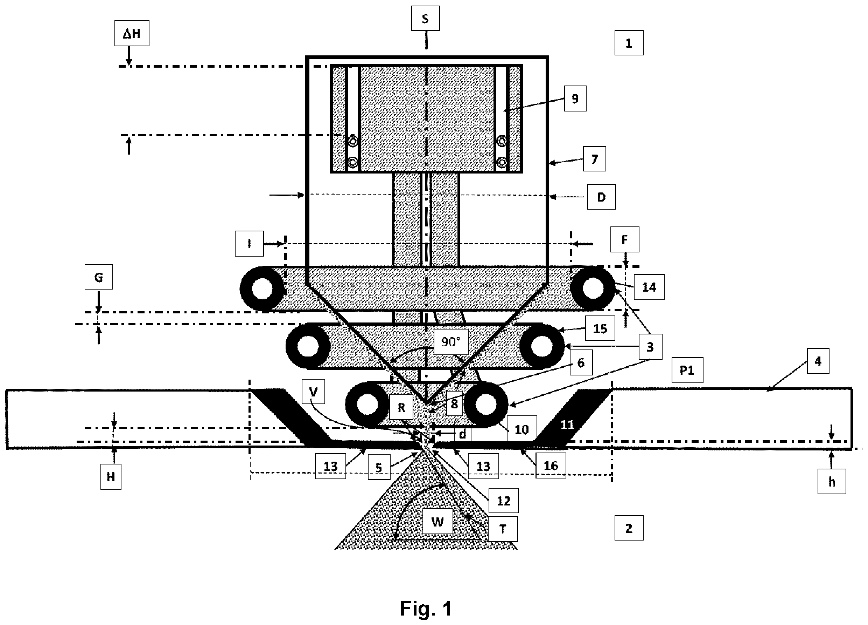

- **Fig. 1**: einen schematischen Axialschnitt einer Verdüsungsvorrichtung.

Die in der Zeichnung dargestellten Hauptbestandteile der Verdüsungsvorrichtung sind eine Schmelzkammer 1, eine Pulverkammer 2 (auch Verdüsungskammer genannt), eine in der Schmelzkammer 1 angeordnete Induktionsspule 3 und eine zwischen den beiden Kammern 1, 2 angeordnete Düsenplatte 4, in der eine Zerstäubungsdüse 5 zur Verbindung dieser beiden Kammern 1, 2 dient. Die Düsenplatte 4 ist auf der Auslassseite 16 eben und senkrecht zur Fließrichtung eines Schmelzstromes 8 ausgerichtet.

In der unter einem Argondruck p1 stehenden Schmelzkammer 1 wird das zu verdüsende Material in Form eines mit einer 45°-Spitze 6 versehenen zylindrischen Stabes 7 in die konische Induktionsspule 3 mit drei Windungen teilweise eingeführt, wie dies beispielsweise grundsätzlich aus der DE 41 02 101 A1 bekannt ist. Die Konizität der Induktionsspule 3 entspricht der Konizität der Spitze 6 des zu verdüsenden Stabes 7. Die Spitze 6 und insbesondere die Oberfläche der Spitze 6 wird durch mittelfrequenten, die Induktionsspule 3 durchfließenden Strom induktiv erwärmt, bis an der Oberfläche eine schmelzflüssige Phase entsteht. Dieser Schmelzstrom 8 läuft an der konischen Fläche nach unten und tropft von der Spitze 6 in Form eines kontinuierlichen Gießstrahles ab. Der Massenfluss des den Schmelzstrom 8 bildenden Gießstrahles kann über die induktiv eingekoppelte elektrische Leistung in einem breiten Bereich zwischen 0,4 kg/min und 2,5 kg/min variiert werden. Als für die Verdüsung besonders geeignet wird ein Schmelzstrom zwischen 0,8 und 1,5 kg/min angesehen. Während der Verdüsung rotiert der Stab 7 langsam um seine Symmetrieachse S und fährt kontinuierlich nach unten. Aus dem Durchmesser D des Stabes 7, der zwischen 30 und 200 mm liegen kann, und der eingestellten Absenkgeschwindigkeit ergibt sich die jeweilige Schmelzrate. Als prozesstechnisch besonders günstig haben sich Stabdurchmesser D zwischen 80 und 150 mm erwiesen.

Durch eine in der Zeichnung lediglich schematisch dargestellte lineare Aufhängung 9 ist die Höhenverstellbarkeit ΔH der Induktion Spule 3 realisiert, durch die die freie Fallhöhe des Gießstrahles bis zur Düse und damit, wie oben erwähnt, die Viskosität der Schmelze beim Eintritt in die Düse variiert werden kann. Als technisch sinnvoll haben sich Abstände zwischen Zerstäubungsdüse 5 und Induktionsspule 3 von 3 bis 100 mm erwiesen. Bei kleineren Spulenabständen besteht die Gefahr von Spannungsüberschlägen von der Spule auf die Düse, bei größeren Abständen besteht die Gefahr der Aufspaltung des Gießstrahles vor dem Eintritt in die Düsenöffnung. Als weiterhin besonders vorteilhaft haben sich horizontale Spulenwindungen herausgestellt, da hiermit ein Auslenken des Gießstrahles durch elektromagnetische Kräfte bei Verlassen des Spulenmagnetfeldes im Gegensatz zu steigenden Spulenwindungen vermieden werden kann.

Die rotationssymmetrische Zerstäubungsdüse 5 befindet sich mit ihrem Mittelpunkt in der Symmetrieachse S von Stab 7 und Spule 3 mit dem Abstand H unterhalb der untersten Windung in der Induktionsspule 3. Sie ist in einem gesonderten, lösbar in der Düsenplatte 4 sitzenden Düseneinsatz 11 angeordnet, der durch das Anpressen mit dem Druck p1 auf die wassergekühlte Düsenplatte 4 indirekt gekühlt. Der Schmelzstrom 8 wird von dem aus der Schmelzkammer 1 in die Pulverkammer 2 strömenden Gas radial umhüllt, eingeschnürt und durch die kreisförmige Öffnung der Zerstäubungsdüse 5 bis höchstens auf Schallgeschwindigkeit am Düsenausgang beschleunigt. Triebkraft hierfür ist die positive Druckdifferenz zwischen dem Gasdruck in der Schmelzkammer p1 und dem Gasdruck p2 in der Pulverkammer 2. Diese Druckdifferenz beträgt mindestens 0,2 bar, höchsten 25 bar. Technisch besonders vorteilhafte Druckdifferenzen liegen im Bereich zwischen 2 bar und 10 bar.

Auch bei hohen Druckdifferenzen p1 - p2 wird das Verdüsungsgas V in der Zerstäubungsdüse 5 aufgrund der ausschließlich konvergenten Düsenform höchstens bis Schallgeschwindigkeit beschleunigt, da im Überschallbereich ein konvergentes Düsenprofil als Diffusor wirkt und das Gas wieder abbremst. Je höher die Druckdifferenz p1 - p2 ist, desto eher wird die Grenze der Schallgeschwindigkeit im Düsenprofil erreicht. Als Konsequenz ist die Gasströmung nicht laminar, da der Gasdruck unmittelbar am Düsenausgang eine Funktion der Druckdifferenz und signifikant höher als der Umgebungsdruck p2 in der Pulverkammer ist.

Das Verdüsungsgas verursacht Druck- und Scherspannungen im strahlförmigen Schmelzstrom 8, wodurch dieser eingeschnürt und beschleunigt wird. Die Schmelzengeschwindigkeit im Schmelzstrahl nimmt dabei radial von außen nach innen ab. Nach Verlassen der Zerstäubungsdüse 5 bauen sich die Druck- und Scherspannungen augenblicklich durch das Aufreißen des Schmelzstrahlfilaments 12 in einzelne Tröpfchen ab, die in der Verdüsungskammer zu sphärischen Pulverteilchen erstarren. Überraschenderweise sind dafür weder eine laminare Gasströmung oder Gasgeschwindigkeiten größer als die Schallgeschwindigkeit erforderlich. Im Gegenteil, durch das Verdüsen ausschließlich im Unterschallbereich werden gegenüber der bekannten LAVAL-Verdüsung die Sphärizität der Pulverteilchen verbessert und die Gasporosität verringert. Dies wird erreicht durch ein ausschließlich konvergentes Düsenprofil, bei dem die Düsenflanken 13 im Querschnitt kreisbogenförmig in Form eines Teilkreises mit einem Radius R von 2 bis 15 mm, vorzugsweise von 5 mm und einer Höhe h der Zerstäubungsdüse 5 ausgebildet sind, die kleiner als der Konvergenzkreisradius R ist. Eine Tangente T am Düsenaustritt weist einen Winkel W von < 90 ° bezüglich der Düsenauslassseite auf. Im konkreten Ausführungsbeispiel beträgt die Höhe h 4,5 mm bei einem Konvergenzradius R von 5 mm. Der Durchmesser der Düse d kann von 2 bis 20 mm variieren. Im Ausführungsbeispiel beträgt der Düsendurchmesser d 10 mm. Mit diesen Parametern wird in einem Ti-Legierungspulver bei einem Druck von p1 = 4,5 bar und p2 = 930 mbar ein d₅₀ - Wert von 50 µm erreicht.

Der Düseneinsatz 11 ist im Übrigen aus einem arteigenen Material hergestellt, das verdüst werden soll, also beispielsweise aus TiAl oder Titan. Sein Durchmesser E kann zwischen 20 und 200 mm, vorzugsweise bei 140 mm liegen.

Der Stab 7 kann beispielsweise eine sogenannte EIGA- Elektrode mit einem Durchmesser D bis zu 150 mm sein. Im gezeigten Ausführungsbeispiel ist an Durchmesser D von 115 mm gewählt.

Für die Induktionsspule 3 in Form einer innengekühlten, konischen Spule aus Kupfer mit einer Steigung von 45° kann der Innendurchmesser I der obersten Windung 14 bis zu 170 mm, konkret beispielsweise 130 mm betragen und der vertikale Abstand G der obersten, mittleren und untersten Spulenwindungen 14, 15, 10 eine Dimension von 3 bis 20 mm, vorzugsweise 8 mm aufweisen. Der Durchmesser F des Spulenrohres kann 10 bis 30 mm, vorzugsweise 16 mm betragen. Es ist auch ein rechteckiger Querschnitt möglich.

Der Abstand H zwischen der Unterseite der Induktionsspule 3 und Düse 5 beträgt 10 mm.

## Patentansprüche

1. Vorrichtung zur Verdüsung eines metallischen, intermetallischen oder keramischen Schmelzstromes mittels eines Gases zu sphärischem Pulver, umfassend
- eine Schmelzkammer (1),
- eine Pulverkammer (2),
- eine Induktionsspule (3) in der Schmelzkammer (1),
- einem Schmelzmaterial, vorzugsweise Schmelzstab (7) in der Induktionsspule (3) und
- eine die Schmelz- und Pulverkammern (1, 2) miteinander verbindende, in einer Düsenplatte (4) angeordnete Zerstäubungsdüse (5) für den vom Schmelzmaterial durch die Induktionsspule (3) abgeschmolzenen Schmelzstrom (8),
**dadurch gekennzeichnet, dass**
- die Zerstäubungsdüse (5) ein ausschließlich konvergentes Düsenprofil mit im Querschnitt kreisbogenförmigen Düsenflanken (13) besitzt, sodass sowohl das Verdüsungsgas (V) als auch der Schmelzstrom und die daraus erzeugten Tröpfchen eine Geschwindigkeit maximal, vorzugsweise unter der Schallgeschwindigkeit des Verdüsungsgases (V) erreichen.

2. Vorrichtung nach Anspruch 1, **dadurch gekennzeichnet, dass** die Oberfläche der Düsenplatte (4) auf deren Düsenauslassseite eben und senkrecht zur Fließrichtung des Schmelzstromes (8) ausgerichtet ist.

3. Vorrichtung nach Anspruch 1 oder 2, **dadurch gekennzeichnet, dass** die Induktionsspule (3) höhenverstellbar ist.

4. Vorrichtung nach einem der vorgenannten Ansprüche, **dadurch gekennzeichnet, dass** die Induktionsspule (3) sich in Richtung Zerstäubungsdüse (5) konisch verengend ausgebildet ist, wobei koaxial in der Induktionsspule (3) ein zylindrischer Stab (7) des zu verdüsenden Materials zur Erzeugung des Schmelzstroms (8) angeordnet ist.

5. Vorrichtung nach einem der vorgenannten Ansprüche, **dadurch gekennzeichnet, dass** das Düsenprofil rotationssymmetrisch ist und die Zerstäubungsdüse (5) einen Durchmesser (d) an der Stelle des kleinsten Querschnittes von 3 bis 15 mm, vorzugsweise von 6 bis 12 mm, besonders bevorzugt 10 mm aufweist.

6. Vorrichtung nach einem der vorgenannten Ansprüche, **dadurch gekennzeichnet, dass** das Querschnittsprofil der Düsenflanken(13) durch einen Teilkreisbogen mit einem Radius (R) von 2 bis 10 mm, vorzugsweise von 5 mm gebildet ist.

7. Vorrichtung nach einem der vorgenannten Ansprüche, **dadurch gekennzeichnet, dass** die Tangente (T) am Düsenaustritt einen Winkel (W) von < 90 ° bezüglich der Düsenauslassseite aufweist.

8. Vorrichtung nach einem der vorgenannten Ansprüche, **dadurch gekennzeichnet, dass** die Höhe (h) der Zerstäubungsdüse (5) zwischen 2,5 und 9,5 mm, vorzugsweise 4,5 mm beträgt.

9. Vorrichtung nach einem der vorgenannten Ansprüche, **dadurch gekennzeichnet, dass** die Zerstäubungsdüse (5) in einem gesonderten, lösbar in der Düsenplatte (4) sitzenden Düseneinsatz (11) angeordnet ist.

## Claims

1. Device for atomizing a metallic, intermetallic or ceramic melt stream by means of a gas to form spherical powder, comprising
- a melt chamber (1),
- a powder chamber (2),
- an induction coil (3) in the melt chamber (1),
- a melt material, preferably a melt rod (7) in the induction coil (3) and
- an atomizer nozzle (5), which interconnects the melt and powder chambers (1, 2) and is arranged in a nozzle plate (4), for the melt stream (8) melted off from the melt material by the induction coil (3),
**characterized in that**
- the atomizer nozzle (5) has an exclusively convergent nozzle profile having nozzle flanks (13) which have a circular-arc-shaped cross-section, and therefore both the atomizing gas (V) and the melt stream and the droplets generated therefrom reach a velocity which is at most equal to, preferably below the speed of sound of the atomizing gas (V).

2. Device according to claim 1, **characterized in that** the surface of the nozzle plate (4) on its nozzle outlet side is flat and oriented perpendicularly to the flow direction of the melt stream (8).

3. Device according to claim 1 or 2, **characterized in that** the induction coil (3) is adjustable in height.

4. Device according to any one of the preceding claims, **characterized in that** the induction coil (3) is of conically narrowing design in the direction of the atomizer nozzle (5), wherein a cylindrical rod (7) of the material to be atomized is arranged coaxially in the induction coil (3) for generating the melt stream (8).

5. Device according to any one of the preceding claims, **characterized in that** the nozzle profile is rotationally symmetrical and the atomizer nozzle (5) has a diameter (d) at the point of smallest cross-section of 3 to 15 mm, preferably of 6 to 12 mm, particularly preferably 10 mm.

6. Device according to any one of the preceding claims, **characterized in that** the cross-sectional profile of the nozzle flanks (13) is formed by a pitch circle arc having a radius (R) of 2 to 10 mm, preferably of 5 mm.

7. Device according to any one of the preceding claims, **characterized in that** the tangent (T) at the nozzle outlet has an angle (W) of < 90 ° with respect to the nozzle outlet side.

8. Device according to any one of the preceding claims, **characterized in that** the height (h) of the atomizer nozzle (5) is between 2.5 and 9.5 mm, preferably 4.5 mm.

9. Device according to any one of the preceding claims, **characterized in that** the atomizer nozzle (5) is arranged in a separate nozzle insert (11) detachably seated in the nozzle plate (4).

## Revendications

1. Dispositif pour l'atomisation d'un flux de fusion métallique, intermétallique ou céramique au moyen d'un gaz en une poudre sphérique, comprenant
- une chambre de fusion (1),
- une chambre à poudre (2),
- une bobine d'induction (3) dans la chambre de fusion (1),
- un matériau fusible, de préférence une barre fusible (7) dans la bobine d'induction (3) et
- une buse d'atomisation (5) reliant entre elles les chambres de fusion et à poudre (1, 2) et disposée dans une plaque à buses (4) pour le flux de fusion (8) fondu du matériau de fusion par la bobine d'induction (3),
**caractérisé en ce que**
- la buse d'atomisation (5) possède un profil de buse exclusivement convergent avec des flancs de buse (13) en forme d'arc de cercle en section transversale, de sorte qu'aussi bien le gaz d'atomisation (V) que le flux de fusion et les gouttelettes produites à partir de celui-ci atteignent une vitesse maximale, de préférence inférieure à la vitesse du son du gaz d'atomisation (V).

2. Dispositif selon la revendication 1, **caractérisé en ce que** la surface de la plaque à buses (4) sur son côté de sortie de buse est plane et orientée perpendiculairement à la direction d'écoulement du flux de fusion (8).

3. Dispositif selon la revendication 1 ou 2, **caractérisé en ce que** la bobine d'induction (3) est réglable en hauteur.

4. Dispositif selon l'une quelconque des revendications précédentes, **caractérisé en ce que** la bobine d'induction (3) est réalisée en se rétrécissant de manière conique en direction de la buse d'atomisation (5), une barre cylindrique (7) du matériau à atomiser étant disposée coaxialement dans la bobine d'induction (3) pour générer le flux de fusion (8).

5. Dispositif selon l'une quelconque des revendications précédentes, **caractérisé en ce que** le profil de la buse est à symétrie de révolution et la buse d'atomisation (5) présente un diamètre (d) à l'endroit de la plus petite section transversale de 3 à 15 mm, de préférence de 6 à 12 mm, de manière particulièrement préférée de 10 mm.

6. Dispositif selon l'une quelconque des revendications précédentes, **caractérisé en ce que** le profil de la section transversale des flancs de buse (13) est formé par un arc de cercle partiel d'un rayon (R) de 2 à 10 mm, de préférence de 5 mm.

7. Dispositif selon l'une quelconque des revendications précédentes, **caractérisé en ce que** la tangente (T) à la sortie de la buse présente un angle (W) < 90 ° par rapport au côté de sortie de la buse.

8. Dispositif selon l'une quelconque des revendications précédentes, **caractérisé en ce que** la hauteur (h) de la buse d'atomisation (5) est comprise entre 2,5 et 9,5 mm, de préférence 4,5 mm.

9. Dispositif selon l'une quelconque des revendications précédentes, **caractérisé en ce que** la buse d'atomisation (5) est disposée dans un insert de buse (11) séparé, logé de manière amovible dans la plaque à buses (4).
